# EUROPÄISCHE PATENTSCHRIFT

(11) **EP 1 698 871 B1**
(45) Veröffentlichungstag und Bekanntmachung des Hinweises auf die Patenterteilung: **24.11.2010**
(21) Anmeldenummer: 06110279.4
(22) Anmeldetag: 22.02.2006
(51) Int. Cl.: G01G 21/23

(54) **Einbausatz für eine Wägezelle**
Module for receiving a load cell
Module pour recevoir une cellule de pesage

(30) Priorität: 02.03.2005 DE 102005010134; 04.05.2005 DE 102005020888
(43) Veröffentlichungstag der Anmeldung: 06.09.2006
(73) Patentinhaber: Sartorius Mechatronics T&H GmbH, 22145 Hamburg (DE)
(72) Erfinder: Vayhinger, Klaus, 21337, Lüneburg (DE); Kuchel, Andreas, 22147, Hamburg (DE)
(74) Vertreter: Cohausz & Florack

(56) Entgegenhaltungen:
- EP-A- 1 046 889
- US-A- 3 997 014
- US-B1- 6 331 682
- PATENT ABSTRACTS OF JAPAN Bd. 2003, Nr. 08, 6. August 2003 (2003-08-06) -& JP 2003 121250 A (SARTORIUS KK), 23. April 2003 (2003-04-23)

## Beschreibung

Die Erfindung betrifft einen Einbausatz für eine Wägezelle mit einer unteren Montageplatte, einer oberen Montageplatte, zwei Druckstücken zur Aufnahme einer Wägezelle und mindestens einem eine integrierte Absturz-, Abhebe- und/oder Begrenzungssicherung bildenden Sicherungselement, wobei das Sicherungselement ein Verbindungselement und ein Anschlagselement aufweist, wobei das Verbindungselement und das Anschlagselement miteinander in Formschluss stehen.

Wägezellen werden überall dort in der Industrie eingesetzt, wo das Gewicht eines Behälters, Silos, Tanks, etc. bestimmt werden soll. Um die messtechnischen Eigenschaften der Wägezelle möglichst optimal nutzen zu können und um entsprechend gute Wägeergebnisse zu erzielen, werden die Wägezellen über Druckstücke in speziell angepasste Einbausätze integriert. Dabei leitet eine Trägerplatte, die beispielsweise mit den Standfüßen eines Silos verbunden ist, über mindestens ein Druckstück die Kraft auf eine auf einer Bodenplatte des Einbausatzes stehenden Wägezelle weiter. Damit zusätzlich einwirkende Kräfte in horizontaler oder vertikaler Richtung keinen negativen Einfluss auf die Wägung haben und die Standsicherheit der Anlage gewährleistet ist, werden im unterschiedlichen Umfang zur Sicherung Fesselungen, seitliche Anschläge, Abhebesicherungen oder Absturzsicherungen vorgesehen.

Bekannte Einbausätze sind in EP 1 046 889 A1 US 3 997 014, JP 200 312 1250 und US 6331 682 B1 offenbart.

Bei den bisher bekannten Einbausätzen für eine Wägezelle ist jedoch nachteilig, dass die Einbausätze viele Löcher, Hohlräume und Vertiefungen, wie z. B. nicht abgedeckte Bohrungen oder Schrauben, besitzen, in denen sich Schmutz ansammeln kann, der nicht von alleine abfließt. Des Weiteren befinden sich in den bekannten Einbausätzen Ecken und Spalte sowie schmale Zwischenräume zwischen Platten und Druckstücken, die schlecht zugänglich oder nicht einsehbar sind und daher schlecht zu reinigen sind, so dass sich Pilze und Bakterien leicht festsetzen und vermehren können. Nachteilig sind außerdem waagerechte Flächen, von denen Schmutz und Reinigungsflüssigkeiten nicht von selbst ablaufen. Besonders beim Einsatz eines Einbausatzes für eine Wägezelle im Bereich der chemischen und pharmazeutischen Industrie und der Lebensmittel- und Kosmetikindustrie ist die Hygiene und damit die Möglichkeit einer einfachen Reinigung besonders wichtig (siehe Vorschriften/Richtlinien GMP/EHEDG/HACCP).

Ausgehend von dem erläuterten Stand der Technik liegt der Erfindung die Aufgabe zugrunde, einen Einbausatz für eine Wägezelle zur Verfügung zu stellen, bei dem enge Spalte und Hinterschneidungen bzw. Toträume vermieden werden, mit dem Ziel eine gute und leichte Reinigung sicher zu stellen. Des Weiteren soll erreicht werden, dass Flüssigkeiten weitestgehend von selbst ablaufen.

Diese Aufgabe ist durch die im Kennzeichen des Anspruchs 1 bzw. 9 angegeben Merkmale gelöst werden.

Vorteilhafte Ausgestaltungen dieser Konstruktion ergeben sich aus den Merkmalen der abhängigen Ansprüche.

Erfindungsgemäß ist die zuvor hergeleitete und aufgezeigte Aufgabe eines Einbausatzes für eine Wägezelle dadurch gelöst, dass das Verbindungselement und das obere Druckstück mit der oberen Montageplatte stoffschlüssig verbunden sind und das Anschlagselement und das untere Druckstück mit der unteren Montageplatte stoffschlüssig verbunden sind. Die Druckstücke zur Aufnahme der Wägezelle haben die Aufgabe, die Kraft von den runden Kuppen des hochfesten Messelements auf die Fläche der weniger festen oberen und unteren Montageplatte zu verteilen. Durch die stoffschlüssigen Verbindungen wird erreicht, dass zwischen den Druckstücken bzw. dem Sicherungselement und der unteren und oberen Montageplatte keine Fugen, Spalte oder mikroskopische Hohlräume entstehen, in denen sich geschützte Unterschlupfräume für Bakterien und Pilzen bilden.

Das Verbindungselement weist in einer vorteilhaften Ausführungsform der Erfindung eine bolzenartige, runde Form auf. Durch die runde Form werden Ecken oder Hohlräume am formschlüssigen Verbindungselement vermieden, wodurch Schmutzablagerungen verhindert werden, eine optimale Reinigungsmöglichkeit gegeben ist und Flüssigkeiten ungehindert ablaufen können. Des Weiteren kann das formschlüssige Verbindungselement eine konische Form besitzen.

Eine weitere vorteilhafte Ausgestaltung der Erfindung liegt darin, dass das Anschlagselement aus einem bogenförmigen Rohrabschnitt besteht. Durch die bogenförmige Ausführungsform des Anschlagselements wird erreicht, dass Flüssigkeiten von dessen Oberfläche selbsttätig ablaufen. Die Schnittflächen des Anschlagselements sind dabei, wie oben beschrieben, stoffschlüssig mit der unteren Montageplatte verbunden. Das Anschlagselement zur horizontalen Anschlagssicherung besteht vorteilhafterweise aus einem bogenförmigen Rohrabschnitt, welches eine Durchgangsbohrung mit einem umlaufenden Spiel aufweist, durch die das Verbindungselement hindurchgeführt wird. Die Durchgangsbohrung ist so bemessen, dass eine gute und leichte Reinigung gewährleistet ist.

Dadurch, dass in einer vorteilhaften Ausführungsform die stoffschlüssige Verbindung vorzugsweise als Schweiß-, Löt- oder Klebenaht ausgebildet ist, werden kleine Spalte und Löcher, die z.B. bei Schraubverbindungen entstehen, in denen sich leicht Schmutz ansammelt, verhindert. Diese stoffschlüssigen Verbindungen befinden sich erfindungsgemäß zwischen den Druckstücken und der oberen und unteren Montageplatte, zwischen dem Sicherungselement und der oberen Montageplatte, bzw. dem Verbindungselement und der oberen Montageplatte und zwischen den Schnittflächen des bogenförmigen Rohrabschnittes und der unteren Montageplatte.

Das Verbindungselement weist in einer weiteren vorteilhaften Ausgestaltung des erfindungsgemäßen Einbausatzes am unteren Ende eine Durchgangsbohrung auf, in der horizontal zur unteren Montageplatte ein Querbolzen mit Vertikalspiel zum Anschlagselement als Abhebesicherung angeordnet ist. Durch die Abhebesicherung, bei der der Querbolzen in seiner Bewegung in vertikaler Richtung nach oben durch die untere Seite des Anschlagselements begrenzt wird, wird ein Abheben der Last vermieden. Dadurch, dass der Querbolzen rund ausgestaltet ist und keine Vertiefungen besitzt, wird die Ablagerung von Schmutz verhindert.

Dadurch, dass der Querbolzen in einer weiteren vorteilhaften Ausgestaltung an dem Verbindungselement über einen Flansch mit einer Gewindebohrung lösbar befestigt ist, wird eine einfache und schnelle Montierbarkeit gewährleistet. Der Querbolzen wird dabei parallel zur unteren Montageplatte durch das Durchgangsloch im Bolzen geführt und am anderen Ende mit einem Flansch, der eine Bohrung mit Gewinde aufweist, fixiert. Der Querbolzen ist dabei lediglich mit dem Verbindungselement verbunden und nicht mit der unteren Montageplatte oder dem Anschlagselement.

Des Weiteren ist in der vorteilhaften Gestaltung der Erfindung eine den Absturz der Last verhindernde Absturzsicherung vorgesehen, die dadurch realisiert wird, dass das Verbindungselement im montierten Zustand einen geringen Abstand zur unteren Montageplatte besitzt. Der Absturzweg wird auf 4 bis 5 mm begrenzt, wodurch Schäden an der Last oder der Wägezelle verhindert werden.

Eine weitere vorteilhafte Ausgestaltung der Erfindung besteht darin, dass das Anschlagselement die Absturz- und Abhebesicherung überdeckt und einen ausreichend großen Raum unter dem Anschlagselement zur leichten Reinigung bildet. Das Anschlagselement überdeckt sowohl den unteren Bereich des Verbindungselements als auch den Querbolzen zusammen mit dem Flansch. Das Anschlagselement ist so gestaltet, dass es einen ausreichend großen Durchmesser besitzt, so dass zwischen der unteren Montageplatte und dem Anschlagselement ein ausreichend großer Raum entsteht, der leicht zu reinigen ist.

Des Weiteren sind die Oberflächen nach einer vorteilhaften Ausgestaltung der Erfindung geglättet, insbesondere elektropoliert. Zu den Oberflächen, bei denen die Oberflächenrauigkeit geglättet ist, gehören die Oberflächen der oberen und unteren Montageplatte, der Druckstücke, der Wägezelle, und der Oberflächen des Sicherungselements. Durch die Glättung wird erreicht, dass sich Schmutz oder Bakterien auf den Oberflächen nicht festsetzen können.

Dadurch, dass in der oberen und unteren Montageplatte große Montagebohrungen mit horizontalem Spiel zur Montage und zur Ausrichtung des Einbausatzes gegenüber der Last und dem Widerlager vorgesehen sind, wobei die Montagebohrungen im montierten Zustand durch Abdeckscheiben abgedeckt sind, kann in einer weiteren vorteilhaften Ausführungsform die Ausrichtung des Einbausatzes leicht realisiert werden und durch die abdeckenden Abdeckscheiben wird das Eindringen von Schmutz und Flüssigkeiten in die Montagebohrungen verhindert. Der Vorteil von Montagebohrungen mit großem Durchmesser gegenüber der sonst üblichen Langlöcher besteht darin, dass die Montagebohrungen mit großem Durchmesser einfacher und kostengünstiger zu fertigen sind als die üblichen Langlöcher, sie aber trotzdem die Fertigungstoleranzen der Last und die Fertigungstoleranzen des Fundaments in horizontaler Richtung einfach ausgleichen. Die Abdeckscheiben sind in einer vorteilhaften Ausgestaltung so gestaltet, dass sie die Montagebohrung überdecken und die in der Montagebohrung befindliche Schraube umschließen, wobei die Abdeckscheiben eine schräg abfallende Fläche von der Unterseite des Schraubenkopfes hin zur Montageplatte aufweisen. Durch die schräg abfallende Fläche wird erreicht, dass sich kein Schmutz absetzen kann und Flüssigkeit gut ablaufen kann.

Nachfolgend wird die Erfindung anhand von Zeichnungen erläutert. Es zeigen schematisch
- Fig. 1: ein Ausführungsbeispiel eines erfindungsgemäßen Einbausatzes für Wägezellen in einer seitlichen Ansicht
- Fig. 2: einen Längsschnitt gemäß der Linie A-A in Fig. 1 eines Sicherungselements eines erfindungsgemäßen Einbausatzes für Wägezellen
- Fig. 3: eine Montagebohrung eines erfindungsgemäßen Einbausatzes.

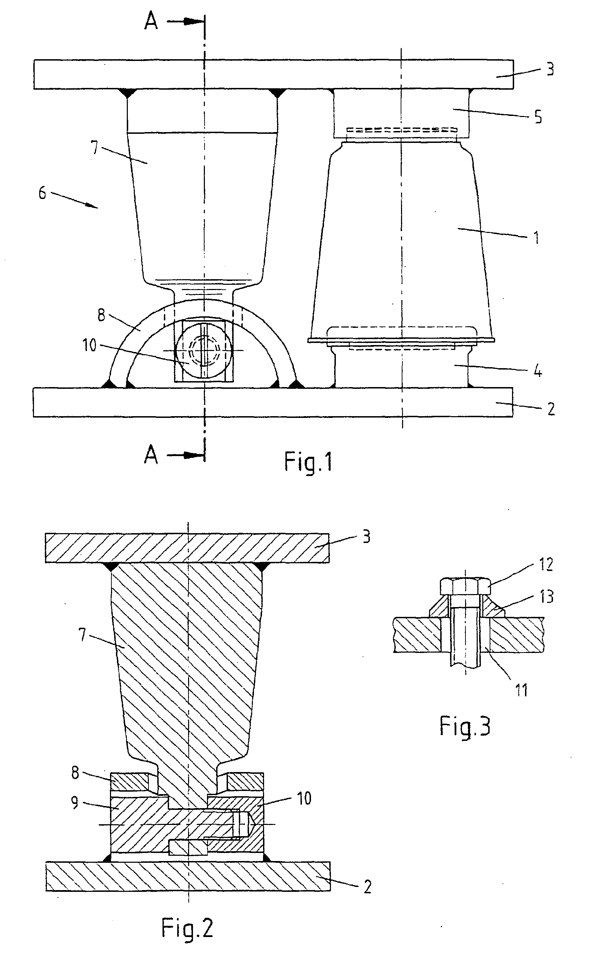

Das in Fig. 1 dargestellte Ausführungsbeispiel eines Einbausatzes einer Wägezelle zeigt eine Wägezelle 1, eine untere Montageplatte 2, eine lastaufnehmende obere Montageplatte 3, zwei Druckstücke 4, 5 zur Aufnahme der Wägezelle 1 und ein Sicherungselement 6. Die beiden Druckstücke 4, 5 und das Sicherungselement 6 sind erfindungsgemäß mittels stoffschlüssiger Verbindungen jeweils an der untere Montageplatte 2 und an der oberen Montageplatte 3 befestigt, wodurch schlecht zu reinigende Löcher, Fugen oder Spalte vermieden werden, in denen sich Bakterien und Pilze festsetzen und vermehren können.

Das Sicherungselement 6 umfasst ein Verbindungselement 7 und ein Anschlagselement 8, wobei das Verbindungselement 7 und das Anschlagselement 8 miteinander in Formschluss stehen. In dem dargestellten Ausführungsbeispiel ist das Verbindungselement 7 in Form eines runden, konischen Bolzens, der an seiner unteren Hälfte in Form eines zylinderförmigen Zapfens ausgebildet ist, ausgeführt. Durch die runde Form werden Ecken oder Hohlräume vermieden, wodurch Ablagerungen von Schmutz verhindert werden, eine optimale Reinigungsmöglichkeit gegeben ist und Flüssigkeiten ungehindert ablaufen können.

Das Verbindungselement 7 ist an seinem oberen Ende stoffschlüssig an der Unterseite der oberen Montageplatte 3 befestigt.

Das untere Ende des Verbindungselements 7 ist nicht an der unteren Montageplatte 2 befestigt, sondern das Verbindungselement 7 weist im montierten Zustand einen Abstand von 4 bis 5 mm zur unteren Montageplatte 2 auf, wodurch die Absturzsicherung gebildet wird. Beim Versagen der Wägezelle 1 wird dadurch der Absturzweg der mit der Last verbundenen oberen Montageplatte 3 begrenzt, da die Unterseite des Verbindungselements 7 dann zum Aufliegen auf der unteren Montageplatte 2 kommt, wodurch ein Umstürzen der Last vermieden wird.

Das Anschlagselement 8 ist in Form eines bogenförmigen Rohrabschnittes ausgeführt, wobei die Schnittflächen des Anschlagselements 8 stoffschlüssig mit der unteren Montageplatte 2 verbunden sind. Das Anschlagselement 8 besitzt in der Mitte des Bogens eine Durchgangsbohrung mit einem ausreichend großen Spiel, durch die das Verbindungselement 7 im Bereich des zylinderförmigen Zapfens hindurchgeführt wird. Durch das Anschlagselement 8 wird der horizontale Bewegungsbereich in zwei Richtungen durch einen seitlichen Anschlag begrenzt, der bei übermäßiger Bewegung des auf der oberen Montageplatte 3 befindlichen Behälters notwendig ist.

In Fig. 2 ist ein Längsschnitt gemäß der Linie A-A in Fig. 1 eines Sicherungselements 6 dargestellt. In dieser Darstellung ist zu erkennen, dass das Verbindungselement 7 an seinem unteren Ende im Bereich des zylinderförmigen Zapfens eine Durchgangsbohrung aufweist, durch die horizontal zur unteren Montageplatte 2 ein Querbolzen 9 hindurchgeführt ist. Dieser Querbolzen 9 ist an dem Verbindungselement 7 über einen Flansch 10, der ein Sackloch mit Gewinde aufweist, lösbar verbunden, wodurch eine einfache und schnelle Montierbarkeit gewährleistet ist. Der Querbolzen 9 besitzt ein Spiel in vertikaler Richtung zum Anschlagselement 8, durch die ein Abheben der Last durch Anschlag des Querbolzens 9 an die Unterseite des Anschlagselements 8 verhindert wird.

Fig. 3 zeigt eine Montagebohrung 11 eines erfindungsgemäßen Einbausatzes. Diese Montagebohrungen 11, durch die Befestigungsschrauben 12 hindurchgeführt werden, befinden sich an der unteren Montageplatte 2 und an der oberen Montageplatte 3 und dienen zur Montage des Einbausatzes und zur Ausrichtung des Einbausatzes gegenüber der Last und dem Widerlager. Die Montagebohrungen 11 weisen ein horizontales Spiel auf, wodurch Fertigungstoleranzen der Last und Fertigungstoleranzen des Fundaments in horizontaler Richtung einfach ausgeglichen werden können. Des Weiteren werden die Montagebohrungen 11 im montierten Zustand durch Abdeckscheiben 13 abgedeckt, wobei die Abdeckscheiben 13 die in den Montagebohrungen 11 befindlichen Schrauben 12 umschließen und in der dargestellten Ausführungsform eine von der Unterseite des Schraubenkopfes zur Montageplatte 2, 3 hin schräg abfallende Fläche aufweisen, an der Flüssigkeit selbsttätig ablaufen kann. Die Unterseite der Abdeckscheibe 13 schließt bündig mit der Montageplatte 2, 3, so dass kein Spalt entsteht und sich dadurch an diesen Stellen kein Schmutz ablagern kann.

## Patentansprüche

1. Einbausatz für eine Wägezelle (1) mit einer unteren Montageplatte (2), einer oberen Montageplatte (3), zwei Druckstücken (4, 5) zur Aufnahme einer Wägezelle und mindestens einem eine integrierte Absturz-, Abhebe- und/oder Begrenzungssicherung bildenden Sicherungselement (6), wobei das Sicherungselement (6) ein Verbindungselement (7) und ein Anschlagselement (8) aufweist, wobei das Verbindungselement (7) und das Anschlagselement (8) miteinander in Formschluss stehen,
**dadurch gekennzeichnet,**
**dass** das Verbindungselement (7) mit der oberen Montageplatte (3) stoffschlüssig verbunden ist,
**dass** das obere Druckstück (5) mit der oberen Montageplatte (3) stoffschlüssig verbunden ist,
**dass** das Anschlagselement (8) mit der unteren Montageplatte (2) stoffschlüssig verbunden ist,
**dass** das untere Druckstück (4) mit der unteren Montageplatte (2) stoffschlüssig verbunden ist, und
**dass** das Anschlagselement (8) die Absturz- und Abhebesicherung überdeckt und einen von außen zugänglichen Raum unter dem Anschlagselement (8) aufweist.

2. Vorrichtung nach Anspruch 1,
**dadurch gekennzeichnet, dass** das Verbindungselement (7) eine bolzenartige, runde Form aufweist.

3. Vorrichtung nach einem der Ansprüche 1 oder 2,
**dadurch gekennzeichnet, dass** das Anschlagselement (8) in Form eines bogenförmigen Rohrabschnitts ausgebildet ist.

4. Vorrichtung nach einem der Ansprüche 1 bis 3,
**dadurch gekennzeichnet, dass** die stoffschlüssige Verbindung als Schweiß-, Löt- oder Klebenaht ausgebildet ist.

5. Vorrichtung nach einem der Ansprüche 1 bis 4,
**dadurch gekennzeichnet, dass** das Verbindungselement (7) am unteren Ende eine Bohrung aufweist, in der horizontal zur unteren Montageplatte (2) ein Querbolzen (9) mit Vertikalspiel zum Anschlagselement (8) als Abhebesicherung angeordnet ist.

6. Vorrichtung nach Anspruch 5,
**dadurch gekennzeichnet, dass** der Querbolzen (9) an dem Verbindungselement (7) über einen Flansch (10) mit einer Gewindebohrung lösbar befestigt ist.

7. Vorrichtung nach einem der Ansprüche 1 bis 6,
**dadurch gekennzeichnet, dass** die Oberflächen geglättet, insbesondere elektropoliert sind.

8. Vorrichtung nach einem der Ansprüche 1 bis 7,
**dadurch gekennzeichnet, dass** in der unteren und oberen Montageplatte (2, 3) große Montagebohrungen (11) mit horizontalem Spiel zur Montage und zur Ausrichtung des Einbausatzes gegenüber der Last und dem Widerlager vorgesehen sind, wobei die Montagebohrungen (11) im montierten Zustand durch Abdeckscheiben (13) abgedeckt sind.

9. Einbausatz für eine Wägezelle (1) mit einer unteren Montageplatte (2), einer oberen Montageplatte (3), zwei Druckstücken (4, 5) zur Aufnahme einer Wägezelle und mindestens einem eine integrierte Absturz-, Abhebe- und/oder Begrenzungssicherung bildenden Sicherungselement (6), wobei das Sicherungselement (6) ein Verbindungselement (7) und ein Anschlagselement (8) aufweist, wobei das Verbindungselement (7) und das Anschlagselement (8) miteinander in Formschluss stehen, **dadurch gekennzeichnet,**
**dass** das Verbindungselement (7) mit der oberen Montageplatte (3) stoffschlüssig verbunden ist,
**dass** das obere Druckstück (5) mit der oberen Montageplatte (3) stoffschlüssig verbunden ist,
**dass** das Anschlagselement (8) mit der unteren Montageplatte (2) stoffschlüssig verbunden ist,
**dass** das untere Druckstück (4) mit der unteren Montageplatte (2) stoffschlüssig verbunden ist,
**dass** das Anschlagselement (8) in Form eines bogenförmigen Rohrabschnitts ausgebildet ist, und
**dass** das Verbindungselement (7) am unteren Ende eine Bohrung aufweist, in der horizontal zur unteren Montageplatte (2) ein Querbolzen (9) mit Vertikalspiel zum Anschlagselement (8) als Abhebesicherung angeordnet ist.

10. Vorrichtung nach Anspruch 9,
**dadurch gekennzeichnet, dass** der Querbolzen (9) an dem Verbindungselement (7) über einen Flansch (10) mit einer Gewindebohrung lösbar befestigt ist.

11. Vorrichtung nach Anspruch 9 oder 10,
**dadurch gekennzeichnet, dass** das Anschlagselement (8) die Absturz- und Abhebesicherung überdeckt und einen von außen zugänglichen Raum unter dem Anschlagselement (8) aufweist.

## Claims

1. A mounting kit for a weighing cell (1) comprising a bottom mounting plate (2), a top mounting plate (3), two load transmitting members (4, 5) for receiving a weighing cell and at least one safety member (6) forming an integrated falling off, lifting off and/or limiting safeguard, said safety member (6) comprising a connecting element (7) and a stop element (8), the connecting element (7) and the stop element (8) being engaged in a positive fit,
**characterized in that**
the connecting element (7) is bonded to the top mounting plate (3) by material bonded connection,
the top load transmitting member (5) is bonded to the top mounting plate (3) by material bonded connection,
the stop element (8) is bonded to the bottom mounting plate (2) by material bonded connection,
the bottom load transmitting member (4) is bonded to the bottom mounting plate (2) by material bonded connection, and
the stop element (8) covers the falling off and lifting off safeguard and comprises a space under the stop element (8) accessible from the outside.

2. The device according to claim 1,
**characterized in that** the connecting element (7) comprises a bolt-like round shape.

3. The device according to one of claims 1 or 2,
**characterized in that** the stop element (8) is in the form of an arc-shaped tube section.

4. The device according to one of claims 1 to 3,
**characterized in that** the material bonded connection is a welded, soldered or glued joint.

5. The device according to one of claims 1 to 4,
**characterized in that** the connecting element (7) comprises a bore at its bottom end in which a cross bolt (9) is arranged horizontally with respect to the bottom mounting plate (2) as a safeguard against lifting off, said cross bolt having a vertical play with respect to the stop element (8).

6. The device according to claim 5,
**characterized in that** the cross bolt (9) is removably attached to the connecting element (7) through a flange (10) comprising a tapped bore.

7. The device according to one of claims 1 to 6,
**characterized in that** the surfaces are smoothed, in particular electropolished.

8. The device according to one of claims 1 to 7,
**characterized in that** large mounting bores (11) with a horizontal play are provided in the top and bottom mounting plates (2, 3) for mounting and adjusting the mounting kit with respect to the load and the abutment, said mounting bores (11) being covered by covering washers (13) in the mounted state.

9. A mounting kit for a weighing cell (1) comprising a bottom mounting plate (2), a top mounting plate (3), two load transmitting members (4, 5) for receiving a weighing cell and at least one safety member (6) forming an integrated falling off, lifting off and/or limiting safeguard, said safety member (6) comprising a connecting element (7) and a stop element (8), the connecting element (7) and the stop element (8) being engaged in a positive fit,
**characterized in that**
the connecting element (7) is bonded to the top mounting plate (3) by material bonded connection,
the top load transmitting member (5) is bonded to the top mounting plate (3) by material bonded connection,
the stop element (8) is bonded to the bottom mounting plate (2) by material bonded connection,
the bottom load transmitting member (4) is bonded to the bottom mounting plate (2) by material bonded connection, the stop element (8) is in the form of an arc-shaped tube section, and
the connecting element (7) comprises a bore at its bottom end in which a cross bolt (9) is arranged horizontally with respect to the bottom mounting plate (2) as a safeguard against lifting off, said cross bolt having a vertical play with respect to the stop element (8).

10. The device according to claim 9,
**characterized in that** the cross bolt (9) is removably attached to the connecting element (7) through a flange (10) comprising a tapped bore.

11. The device according to claim 9 or 10,
**characterized in that** the stop element (8) covers the falling off and lifting off safeguard and comprises a space under the stop element (8) accessible from the outside.

## Revendications

1. Kit de montage pour une cellule de pesée (1) avec une plaque de montage inférieure (2), une plaque de montage supérieure (3), deux pièces de pression (4, 5) pour la réception d'une cellule de pesée et au moins avec un élément de sécurité (6) formant une sécurité intégrée de chute, de soulèvement et/ou de délimitation, l'élément de sécurité (6) présentant un élément de connexion (7) et un élément de butée (8), l'élément de connexion (7) et l'élément de butée (8) étant reliés entre eux par liaison de forme,
**caractérisé en ce que**
l'élément de connexion (7) est relié par liaison de matière à la plaque de montage supérieure (3),
la pièce de pression supérieure (5) est reliée par liaison de matière à la plaque de montage supérieure (3),
l'élément de butée (8) est relié par liaison de matière à la plaque de montage inférieure (2),
la pièce de pression inférieure (4) est reliée par liaison de matière à la plaque de montage inférieure (2), et
l'élément de butée (8) recouvre la sécurité de chute et de soulèvement et présente un espace accessible de l'extérieur en dessous de l'élément de butée (8).

2. Dispositif selon la revendication 1, **caractérisé en ce que** l'élément de liaison (7) présente une forme ronde en forme de boulon.

3. Dispositif selon l'une des revendications 1 ou 2, **caractérisé en ce que** l'élément de butée (8) est réalisé avec la forme d'une section tubulaire arquée.

4. Dispositif selon l'une des revendications 1 à 3, **caractérisé en ce que** la connexion par liaison de matière est réalisée comme joint de soudure, de brasage ou de colle.

5. Dispositif selon l'un des revendications 1 à 4, **caractérisé en ce que** l'élément de connexion (7) présente sur l'extrémité inférieure un perçage dans lequel est disposé un boulon transversal (9) horizontalement à la plaque de montage inférieure (2) avec un jeu vertical par rapport à l'élément de butée (8) et servant de sécurité de soulèvement.

6. Dispositif selon la revendication 5, **caractérisé en ce que** le boulon transversal (9) est fixé sur l'élément de liaison (7) de manière amovible par une bride (10) avec un perçage fileté.

7. Dispositif selon l'un des revendications 1 à 6, **caractérisé en ce que** les surfaces sont lissées, en particulier électropolies.

8. Dispositif selon l'une des revendications 1 à 7, **caractérisé en ce qu'**il est prévu dans la plaque de montage inférieure et supérieure (2, 3) des perçages de montage larges (11) avec un jeu horizontal pour le montage et l'orientation du kit de montage par rapport à la charge et à la culée, les perçages de montage (11) étant recouverts à l'état monté par des rondelles de recouvrement (13).

9. Kit de montage pour une cellule de pesée (1) avec une plaque de montage inférieure (2), une plaque de montage supérieure (3), deux pièces de pression (4, 5) pour la réception d'une cellule de pesée et au moins avec un élément de sécurité (6) formant une sécurité intégrée de chute, de soulèvement et/ou de délimitation, l'élément de sécurité (6) présentant un élément de connexion (7) et un élément de butée (8), l'élément de connexion (7) et l'élément de butée (8) étant relié par liaison de forme,
**caractérisé en ce que**
l'élément de connexion (7) est relié par liaison de matière à la plaque de montage supérieure (3),
la pièce de pression supérieure (5) est reliée par liaison de matière à la plaque de montage supérieure (3),
l'élément de butée (8) est relié par liaison de matière à la plaque de montage inférieure (2),
la pièce de pression inférieure (4) est reliée par liaison de matière à la plaque de montage inférieure (2),
l'élément de butée (8) est réalisé avec la forme d'une section tubulaire arquée, et
l'élément de connexion (7) présente sur l'extrémité inférieure un perçage dans lequel est disposé un boulon transversal (9) horizontalement à la plaque de montage inférieure (2) avec un jeu vertical par rapport à l'élément de butée (8) et servant de sécurité de soulèvement.

10. Dispositif selon la revendication 9, **caractérisé en ce que** le boulon transversal (9) est fixé sur l'élément de liaison (7) de manière amovible par une bride (10) avec un perçage fileté.

11. Dispositif selon la revendication 9 ou 10, **caractérisé en ce que** l'élément de butée (8) recouvre la sécurité de chute et de soulèvement et présente un espace accessible de l'extérieur en dessous de l'élément de butée (8).
